# EUROPEAN PATENT SPECIFICATION

(11) **EP 4 311 065 B1**
(45) Date of publication and mention of the grant of the patent: **03.06.2026**
(21) Application number: 21931201.4
(22) Date of filing: 11.10.2021
(51) Int. Cl.: H02J 7/00, B60L 53/00, H02J 7/02, B60L 53/14, B60L 53/22, B60L 53/66

(54) **CHARGING CONTROL GUIDE CIRCUIT AND CHARGING SOCKET**
LADESTEUERUNGSFÜHRUNGSSCHALTUNG UND LADEBUCHSE
CIRCUIT DE GUIDAGE DE COMMANDE DE CHARGE ET PRISE DE CHARGE

(30) Priority: 19.03.2021 CN 202120567464 U
(43) Date of publication of application: 24.01.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2021/123058
(87) International publication number: WO 2022/193626

(56) References cited:
- CN-A- 107 255 759
- CN-A- 109 774 528
- CN-A- 109 969 018
- CN-A- 112 078 392
- CN-A- 112 078 392
- CN-A- 112 886 678
- US-A1- 2017 368 953
- ZHANG X ET AL: "Analysis and Testing of U.S.-China Key Technology for Charging Interoperability of Electric Vehicles", vol. 701, no. 1, 1 March 2021 (2021-03-01), pages 012073, XP093199020, ISSN: 1755-1307, Retrieved from the Internet <URL:https://iopscience.iop.org/article/10.1088/1755-1315/701/1/012073/pdf> DOI: 10.1088/1755-1315/701/1/012073
- IMAZU TOMOYA: "Keynote: CHAdeMO 3.0 - Standard harmonization efforts between CHAdeMO and GB/T", 31 October 2019 (2019-10-31), XP093281619, Retrieved from the Internet <URL:https://www.emove360.com/wp-content/uploads/2019/11/CHAdeMO-3.0.pdf> [retrieved on 20250527]
- YONGDONG LIU: "Progress of Sino-Japan Chaoji Charging Project", 5 June 2021 (2021-06-05), XP093281625, Retrieved from the Internet <URL:http://www.chademo.com/wp2016/wp-content/japan-uploads/2021GA/ChinaChaoJireport2021.pdf> [retrieved on 20250527]
- YAMAGASHI YASUHIKO ET AL: "Updates and Plan 2019", 27 May 2019 (2019-05-27), XP093281635, Retrieved from the Internet <URL:http://www.chademo.com/wp2016/wp-content/uploads/techws/European_TWG_Meeting_2019_05_22/Technical%20WG%2022%20May%202019.pdf> [retrieved on 20250527]

## Description

### TECHNICAL FIELD

The embodiments of the present disclosure relate to the technical field of electric vehicle charging, and particularly to a charging control pilot circuit and a charging socket.

### BACKGROUND

In order to solve the increasingly prominent problems of energy crisis and environmental pollution, new energy vehicles have become the main development strategy in various countries. For example, as a kind of new energy vehicles, electric vehicles driven by electric energy have been widely developed.

The solution of charging technology for electric vehicles is an important issue in the field of electric vehicles. At present, the international mainstream charging systems include a CHAdeMO charging system, a GB2015 charging system and a CCS charging system. In addition, a ChaoJi charging system is also proposed in China. A forward compatibility method, circuit, and converter for electric vehicle DC charging control is known in the prior art, e.g. from CN112078392A. A ChaoJi charging device is known in the prior art, e.g. from Yongdong Liu:"Progress of Sino-Japan Chaoji Charging Project", ,5June 2021 (2021-06-05),XP093281625.

It should be noted that the above introduction to the technical background is only for the convenience for clear and complete explanations of the technical solutions of the present disclosure and facilitate the understanding by those skilled in the art. The above technical solutions cannot be considered to be well known to those skilled in the art merely because they have been described in the background section of the present disclosure.

### SUMMARY

The inventor finds that the existing electric vehicles cannot be forwardly compatible with a plurality of charging systems for communication protocols, interface physical forms, connection circuits, etc. of different charging systems, so cannot meet the demand of the current charging market.

In order to solve at least one of the above technical problems, the embodiments of the present disclosure provide a charging control pilot circuit and a charging socket, which can enable the electric vehicles to be forwardly compatible with a plurality of charging systems and meet the demand of the current charging market.

According to a first aspect of the embodiments of the present disclosure, there is provided a charging control pilot circuit, including: a lead group including a first lead, a second lead and a third lead, and one end of the first lead, one end of the second lead and one end of the third lead are respectively electrically connected to a connection line of an external charging device; a first loop including two or more resistors corresponding to the type of the external charging device, and the first loop is disposed between the other end of the first lead and the other end of the third lead and electrically connected to the first lead and the third lead; and a second loop disposed between the other end of the second lead and the other end of the third lead and electrically connected to the second lead and the third lead.

According to a second aspect of the embodiments of the present disclosure, in which the first loop includes a first branch, and the first branch includes a first resistor, a second resistor, a third resistor and a single-pole four-throw switch, and a moving contact of the single-pole four-throw switch is connected to the other end of the first lead, and four static contacts of the single-pole four-throw switch are respectively suspended and connected to the first resistor, the second resistor and the third resistor, and the first resistor, the second resistor and the third resistor are connected to the other end of the third lead.

According to a third aspect of the embodiments of the present disclosure, in which resistance values of the first resistor, the second resistor and the third resistor are respectively greater than 0 and less than or equal to 100 MΩ.

According to a fourth aspect of the embodiments of the present disclosure, in which the first loop further includes a second branch, which is connected in parallel with the first branch and includes a first switch and a fourth resistor connected in series.

According to a fifth aspect of the embodiments of the present disclosure, in which an initial state of the first switch is normally open.

According to a sixth aspect of the embodiments of the present disclosure, in which an initial state of the first switch is normally closed.

According to a seventh aspect of the embodiments of the present disclosure, in which the first loop further includes a third branch, which is connected in parallel with the first branch and includes a fifth resistor.

According to an eighth aspect of the embodiments of the present disclosure, in which the first loop further includes a diode, a cathode of which is connected to the moving contact of the single-pole four-throw switch, and an anode of which is connected to the other end of the first lead.

According to a ninth aspect of the embodiments of the present disclosure, in which an initial state of the single-pole four-throw switch is normally open.

According to a tenth aspect of the embodiments of the present disclosure, in which an initial state of the single-pole four-throw switch is normally closed.

The second loop includes a second switch, a sixth resistor, a power supply, a third switch and a seventh resistor, and the second switch, the sixth resistor and the power supply are connected in series, and the sixth resistor is connected in parallel with the seventh resistor and the third switch.

Initial states of the second switch and the third switch are normally closed.

According to a fourteenth aspect of the embodiments of the present disclosure, there is provided a charging socket, including the charging control pilot circuit according to any one of the first aspect to the thirteenth aspect of the embodiments of the present disclosure.

One of the advantageous effects of the embodiments of the present disclosure is that by disposing a plurality of resistors corresponding to the type of the charging device in the charging control pilot circuit, the electric vehicle may be forwardly compatible with a plurality of charging systems, and meet the demand of the current charging market.

With reference to the following description and drawings, the particular embodiments of the present disclosure are disclosed in detail, to point out the ways in which the principles of the present disclosure can be adopted. It should be understood that the embodiments of the present disclosure are not limited in scope thereby. The embodiments of the present disclosure include many changes, modifications and equivalents within the scope of the clauses of the appended claims.

Features described and/or illustrated for one embodiment may be used in one or more other embodiments in the same or similar ways, and may be combined with or substitute for features in other embodiments.

It should be emphasized that the term 'comprise/include' when used herein refers to the presence of features, integers, steps or components, but does not exclude the presence or addition of one or more other features, integers, steps or components.

### BRIEF DESCRIPTION OF THE DRAWINGS

Elements and features described in one drawing or implementation of the embodiments of the present disclosure may be combined with elements and features illustrated in one or more other drawings or implementations. Further, in the drawings, similar reference numerals denote corresponding parts in several drawings, and may be used to indicate corresponding parts used in more than one implementation.

The drawings, which are included to provide further understanding of the embodiments of the present disclosure, constitute a part of the specification to illustrate the embodiments of the present disclosure, and together with the description, to explain the principles of the present disclosure. It should be apparent that the drawings in the following description only illustrate some embodiments of the present disclosure, and those of ordinary skill in the art may obtain other drawings therefrom without any creative labor. In the drawings:
FIG. 1 is a schematic diagram of a charging control pilot circuit according to an embodiment of a first aspect of the present disclosure;
FIG. 2 is a schematic diagram of a connection between a charging control pilot circuit and a CCS1 charging device according to an embodiment of a first aspect of the present disclosure;
FIG. 3 is a schematic diagram of a connection between a charging control pilot circuit and a CCS2 charging device according to an embodiment of a first aspect of the present disclosure;
FIG. 4 is a schematic diagram of a connection between a charging control pilot circuit and a CHAdeMO charging device according to an embodiment of a first aspect of the present disclosure;
FIG. 5 is a schematic diagram of a connection between a charging control pilot circuit and a GB2015 charging device according to an embodiment of a first aspect of the present disclosure; and
FIG. 6 is a schematic diagram of a connection between a charging control pilot circuit and a ChaoJi charging device according to an embodiment of a first aspect of the present disclosure.

### DETAILED DESCRIPTION

The foregoing and other features of the present disclosure will become apparent from the following specification with reference to the drawings. In the specification and drawings, particular embodiments of the present disclosure are specifically disclosed, which illustrate some embodiments in which the principles of the present disclosure may be adopted. It should be understood that the present disclosure is not limited to the described embodiments. On the contrary, the present disclosure includes all modifications, variations and equivalents falling within the scope of the appended claims. Various embodiments of the present disclosure will be described below with reference to the drawings. These embodiments are only exemplary, rather than limitations to the present disclosure.

In the embodiments of the present disclosure, the terms 'first', 'second', etc. are used to distinguish different elements from appellations, but they do not indicate any spatial arrangement or temporal order of the elements, and the elements should not be limited by the terms. The term 'and/or' includes any one and all combinations of one or more of the associated listed terms. The terms 'include', 'comprise', 'have', etc. refer to the presence of stated features, elements, parts or components, but do not exclude the presence or addition of one or more other features, elements, parts or components.

In the embodiments of the present disclosure, singular forms such as 'a' and 'the' include plural forms, which should be broadly understood as 'a kind of' or 'a category of' rather than being limited to the meaning of 'one'. Further, the term 'the' should be understood to include both singular and plural forms, unless the context clearly indicates otherwise. In addition, the term 'according to' should be understood as 'at least partially according to ...', and the term 'based on' should be understood as 'at least partially based on ...', unless the context clearly indicates otherwise.

### Embodiments of A First Aspect

An embodiment of a first aspect of the present disclosure provides a charging control pilot circuit 1.

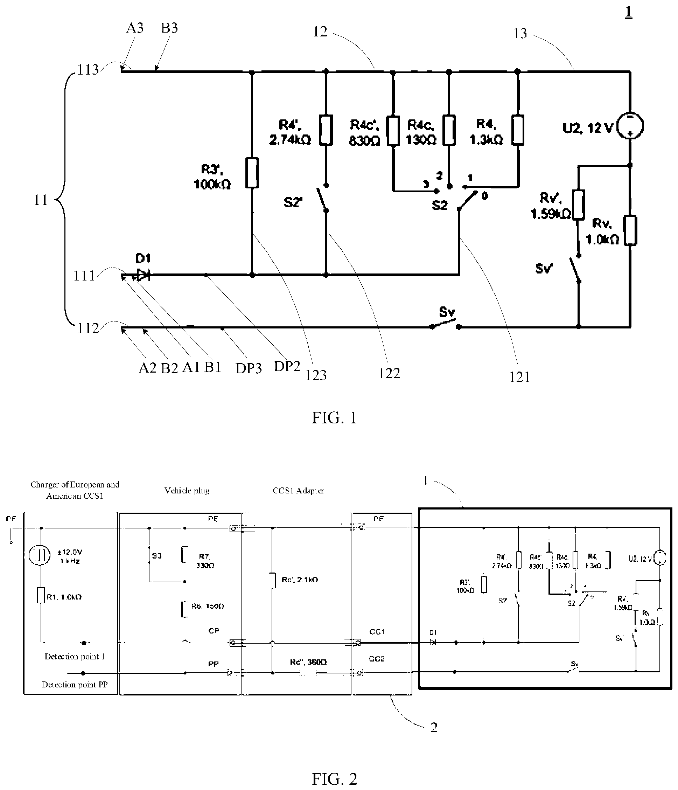

FIG. 1 is a schematic diagram of a charging control pilot circuit 1 according to an embodiment of a first aspect of the present disclosure. As illustrated in FIG. 1, the charging control pilot circuit 1 may include a lead group 11, a first loop 12 and a second loop 13.

The lead group 11 may include a first lead 111, a second lead 112, and a third lead 113. In this embodiment, one end A1 of the first lead 111, one end A2 of the second lead 112 and one end A3 of the third lead 113 are respectively electrically connected to a connection line of an external charging device.

The first loop 12 may include two or more resistors corresponding to the type of the external charging device. The first loop 12 is disposed between the other end B1 of the first lead 111 and the other end B3 of the third lead 113, and is electrically connected to the first lead 111 and the third lead 113.

The second loop 13 is disposed between the other end B2 of the second lead 112 and the other end B3 of the third lead 113, and is electrically connected to the second lead 112 and the third lead 113.

In the embodiment of the present disclosure, by disposing a plurality of resistors corresponding to the type of the charging device in the charging control pilot circuit 1, an electric vehicle may be forwardly compatible with a plurality of charging systems, and meet the demand of the current charging market.

In one or more embodiments, the charging control pilot circuit 1 may be applied to an electric vehicle. In this embodiment, the electric vehicle may be any type of electric vehicle, such as a battery electric vehicle or a hybrid electric vehicle. For another example, the electric vehicle may be an electric vehicle with the ChaoJi charging system or an electric vehicle based on other standards.

In one or more embodiments, the first loop 12 includes two or more resistors with resistance values corresponding to different external charging devices, respectively. The external charging device may be, for example, at least one of the following four types of external charging devices: a charging device of the ChaoJi charging system (hereinafter referred to as a ChaoJi charging device), a charging device of the GB2015 charging system (hereinafter referred to as a GB2015 charging device), a charging device of the CHAdeMO charging system (hereinafter referred to as a CHAdeMO charging device), and a charging device of the CCS charging system (hereinafter referred to as a CCS charging device), in which the CCS charging device may be classified into a charging device of a CCS1 charging system (hereinafter referred to as aCCS1 charging device) and a charging device of a CCS2 charging system (hereinafter referred to as a CCS2 charging device). However, the present disclosure is not limited thereto, and the first loop 12 may further include resistors corresponding to other standards, so that the electric vehicle can be forwardly compatible with other charging systems.

In one or more embodiments, as illustrated in FIG. 1, the first loop 12 may include a first branch 121. The first branch 121 includes a first resistor R4, a second resistor R4c, a third resistor R4c' and a single-pole four-throw switch S2. A moving contact of the single-pole four-throw switch S2 is connected to the other end B1 of the first lead 111; the four static contacts of the single-pole four-throw switch S2 are respectively suspended and connected to the first resistor R4, the second resistor R4c and the third resistor R4c'; and the first resistor R4, the second resistor R4c and the third resistor R4c' are connected to the other end B3 of the third lead 113.

In one or more embodiments, the resistance values of the first resistor R4, the second resistor R4c and the third resistor R4c' are greater than 0 and less than or equal to 100 MΩ respectively.

In one or more embodiments, as illustrated in FIG. 1, the resistance value of the first resistor R4 is greater than that of the third resistor R4c', and the resistance value of the third resistor R4c' is greater than that of the second resistor R4c. However, the present disclosure is not limited thereto, and the resistance values of the first resistor R4, the second resistor R4c and the third resistor R4c' may also satisfy other relationships.

In one or more embodiments, as illustrated in FIG. 1, the resistance value of the first resistor R4 is 10 times that of the second resistor R4c'. However, the present disclosure is not limited thereto, and the resistance values of the first resistor R4 and the second resistor R4c may also satisfy other relationships.

In one or more embodiments, as illustrated in FIG. 1, the resistance value of the first resistor R4 may be 1.3 kΩ, the resistance value of the second resistor R4c may be 130 Ω, and the resistance value of the third resistor R4c' may be 830 Ω. In other words, the first resistor R4 may be a resistor corresponding to the ChaoJi charging device and/or the CCS charging device, the second resistor R4c may be a resistor corresponding to the CHAdeMO charging device, and the third resistor R4c' may be a resistor corresponding to the GB2015 charging device. Therefore, the electric vehicle can be simultaneously compatible with the ChaoJi charging system, the CCS charging system, the CHAdeMO charging system and the GB2015 charging system.

In one or more embodiments, an initial state of the single-pole four-throw switch S2 may be normally open, but the present disclosure is not limited thereto, and the initial state of the single-pole four-throw switch S2 may also be normally closed.

In one or more embodiments, as illustrated in FIG. 1, the first loop 12 may further include a second branch 122. The second branch 122 is connected in parallel with the first branch 121. The second branch 122 includes a first switch S2' and a fourth resistor R4' connected in series.

In one or more embodiments, a resistance value of the fourth resistor R4' may be 2.74 kΩ. However, the present disclosure is not limited thereto, and the resistance value of the fourth resistor R4' may also be any other value.

In one or more embodiments, an initial state of the first switch S2' may be normally open, but the present disclosure is not limited thereto, and the initial state of the first switch S2' may also be normally closed.

In one or more embodiments, as illustrated in FIG. 1, the first loop 12 may further include a third branch 123. The third branch 123 is connected in parallel with the first branch 121 and includes a fifth resistor R3'.

In one or more embodiments, a resistance value of the fifth resistor R3' is 100 kΩ. However, the present disclosure is not limited thereto, and the resistance value of the fifth resistor R3' may also be any other value.

In one or more embodiments, as illustrated in FIG. 1, the first loop 12 may further include a diode D1. A cathode of the diode D1 is connected to the moving contact of the single-pole four-throw switch S2, and an anode of the diode D1 is connected to the other end B1 of the first lead 111.

As illustrated in FIG. 1, the second loop 13 may include a second switch Sv, a sixth resistor Rv, a power supply U2, a third switch Sv' and a seventh resistor Rv'. The second switch Sv, the sixth resistor Rv and the power supply U2 are connected in series, and the sixth resistor Rv is connected in parallel with the seventh resistor Rv' and the third switch Sv'.

In one or more embodiments, an output voltage of the power supply U2 may be 12V, a resistance value of the seventh resistor Rv' may be 1.59 kΩ, and a resistance value of the sixth resistor Rv may be 1 kΩ.

The initial states of the second switch Sv and the third switch Sv' are normally closed.

In one or more embodiments, a detection point 3 (such as DP3 illustrated in FIG. 1) may be disposed on the second loop 13. In this embodiment, by detecting a voltage at the detection point 3, a voltage on the second lead 112 may be obtained to determine the type of the external charging device, and a corresponding communication protocol may be selected according to the type of the external charging device to carry out a charging process.

In one or more embodiments, a detection point 2 (such as DP2 illustrated in FIG. 1) may be disposed on the first loop 12. In this embodiment, by detecting a voltage of the detection point 2, a voltage on the first lead 111 may be obtained to judge whether the charging can be performed, and if so, a charging process is carried out.

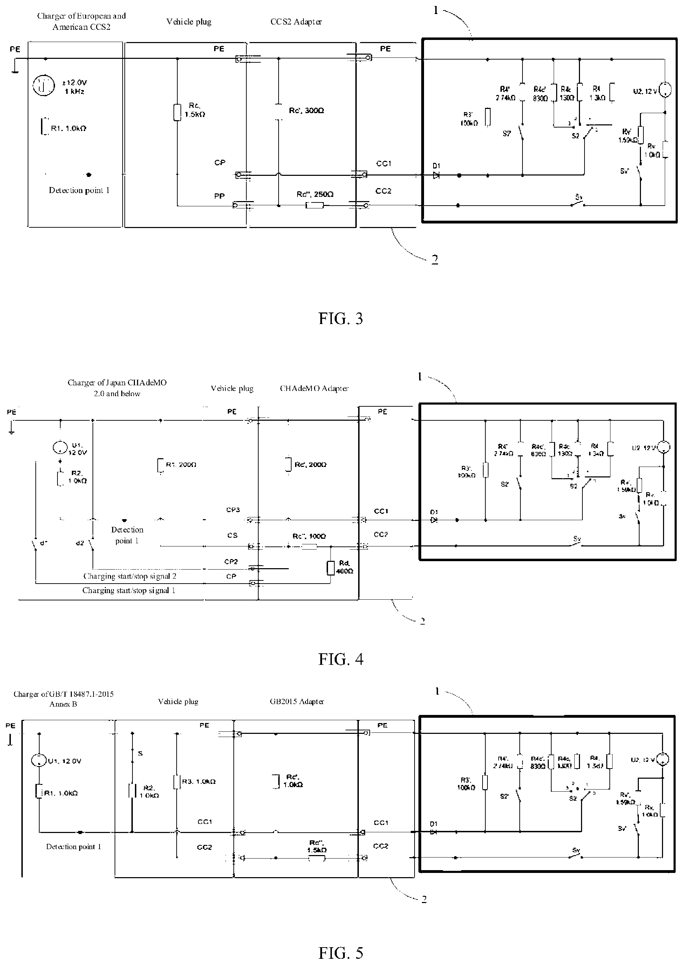

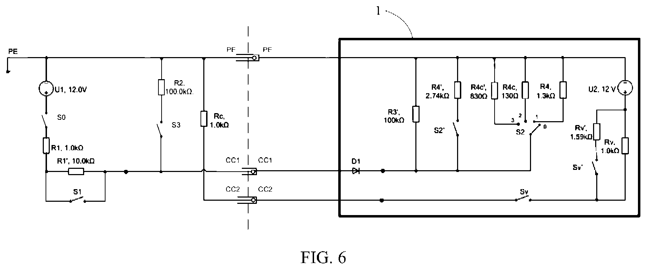

FIG. 2 is a schematic diagram of a connection between a charging control pilot circuit 1 and a CCS1 charging device, FIG. 3 is a schematic diagram of a connection between a charging control pilot circuit 1 and a CCS2 charging device, FIG. 4 is a schematic diagram of a connection between a charging control pilot circuit 1 and a CHAdeMO charging device, FIG. 5 is a schematic diagram of a connection between a charging control pilot circuit 1 and a GB2015 charging device, and FIG. 6 is a schematic diagram of a connection between a charging control pilot circuit 1 and a ChaoJi charging device.

In one or more embodiments, as illustrated in FIGS. 2 to 6, a CC1 lead of a charging control pilot circuit 1 may be corresponding to the first lead 111 of FIG. 1, a CC2 lead may be corresponding to the second lead 112 of FIG. 1, and a PE lead may be corresponding to the third lead 113 of FIG. 1.

In one or more embodiments, when the charging control pilot circuit 1 is electrically connected to an external charging device, the first lead 111, the second lead 112 and the third lead 113 are respectively connected to corresponding leads of the external charging device. For example, as illustrated in FIGS. 2 and 3, when the charging control pilot circuit 1 is connected to a CCS1 charging device or a CCS2 charging device, the CC1 lead, the CC2 lead and the PE lead of the charging control pilot circuit 1 are electrically connected to a CP lead, a PP lead and a PE lead of the CCS1 charging device or the CCS2 charging device, respectively.

In one or more embodiments, the charging control pilot circuit 1 may be electrically connected to the external charging device through a socket body. As illustrated in FIGS. 2 to 5, the charging control pilot circuit 1 may be electrically connected to the socket body 2, and the socket body 2 is electrically connected to the external charging device.

In one or more embodiments, the socket body 2 may be electrically connected to the external charging device through a corresponding adapter. As illustrated in FIGS. 2 to 5, the charging control pilot circuit 1 and the socket body 2 may be electrically connected to the CCS1 charging device, the CCS2 charging device, the CHAdeMO charging device and the GB2015 charging device through a CCS1 adapter, a CCS2 adapter, a CHAdeMO adapter and a GB2015 adapter, respectively.

In one or more embodiments, the electronic components, disposition positions, etc. in the charge control guide circuit 1 are not limited to FIGS. 1 to 6. For example, the charging control pilot circuit 1 may further include other electronic components not illustrated in the drawings, or the charging control pilot circuit 1 also may not include some electronic components illustrated in the drawings.

As can be seen from the above embodiments, by disposing a plurality of resistors corresponding to the types of the charging devices in the charging control pilot circuit, the electric vehicle can be forwardly compatible with a plurality of charging systems and meet the demand of the current charging market.

### Embodiments of A Second Aspect

An embodiment of the present disclosure further provides a charging socket, including a socket body and the charging control pilot circuit 1 as described in the embodiments of the first aspect, in which the socket body is electrically connected to the charging control pilot circuit 1, and the socket body may be the socket body 2 illustrated in FIGS. 2 to 6. By disposing a plurality of resistors corresponding to the types of the charging devices in the charging control pilot circuit, the electric vehicle can be forwardly compatible with a plurality of charging systems and meet the demand of the current charging market.

In the embodiments of the second aspect of the present disclosure, the structure of the above charging control pilot circuit may refer to the description of the embodiments of the first aspect, which will not be repeated here.

As can be seen from the above embodiments, by disposing a plurality of resistors corresponding to the types of the charging devices in the charging control pilot circuit, the electric vehicle can be forwardly compatible with a plurality of charging systems and meet the demand of the current charging market.

The present disclosure has been described as above in conjunction with the particular embodiments, but it should be clear to those skilled in the art that these descriptions are exemplary rather than limitations to the protection scope of the present disclosure.

## Claims

1. A charging control pilot circuit, comprising:
a lead group (11) comprising a first lead (111), a second lead (112) and a third lead (113), wherein one end of the first lead (111), one end of the second lead (112) and one end of the third lead (113) are respectively electrically connected to a connection line of an external charging device, wherein the first lead (111) is the CC1 lead of the charging control pilot circuit, the second lead (112) is the CC2 lead of the charging control pilot circuit, and the third lead (113) is the PE lead of the charging control pilot circuit;
a first loop (12) comprising two or more resistors allowing to adapt to different types of external charging devices, wherein the first loop (12) is disposed between the other end of the first lead (111) and the other end of the third lead (113) and electrically connected to the first lead (111) and the third lead (113); and
a second loop (13) disposed between the other end of the second lead (112) and the other end of the third lead (113) and electrically connected to the second lead (112) and the third lead (113),
wherein the second loop (13) comprises a second switch (Sv), a sixth resistor (Rv), a power supply (U2), a third switch (Sv') and a seventh resistor (Rv'), wherein the second switch (Sv), the sixth resistor (Rv) and the power supply (U2) are connected in series, and the sixth resistor (Rv) is connected in parallel with the seventh resistor (Rv') and the third switch (Sv'); **characterized in that** initial states of the second switch (Sv) and the third switch (Sv') are normally closed.

2. The charging control pilot circuit according to claim 1, wherein the first loop (12) comprises a first branch (121), and the first branch (121) comprises a first resistor (R4), a second resistor (R4c), a third resistor (R4c') and a single-pole four-throw switch (S2), wherein a moving contact of the single-pole four-throw switch (S2) is connected to the other end of the first lead (111), and four static contacts of the single-pole four-throw switch (S2) are respectively suspended and connected to the first resistor (R4), the second resistor (R4c) and the third resistor (R4c'), and the first resistor (R4), the second resistor (R4c) and the third resistor (R4c') are connected to the other end of the third lead (113).

3. The charging control pilot circuit according to claim 2, wherein resistance values of the first resistor (R4), the second resistor (R4c) and the third resistor (R4c') are respectively greater than 0 and less than or equal to 100 MΩ.

4. The charging control pilot circuit according to claim 2, wherein the first loop (12) further comprises a second branch (122), which is connected in parallel with the first branch (121) and comprises a first switch (S2') and a fourth resistor (R4') connected in series.

5. The charging control pilot circuit according to claim 4, wherein an initial state of the first switch (S2') is normally open.

6. The charging control pilot circuit according to claim 4, wherein an initial state of the first switch (S2') is normally closed.

7. The charging control pilot circuit according to claim 2, wherein the first loop (12) further comprises a third branch (123), which is connected in parallel with the first branch (121) and comprises a fifth resistor (R3').

8. The charging control pilot circuit according to claim 2, wherein the first loop (12) further comprises a diode (D1), a cathode of which is connected to the moving contact of the single-pole four-throw switch (S2), and an anode of which is connected to the other end of the first lead (111).

9. The charging control pilot circuit according to claim 2, wherein an initial state of the single-pole four-throw switch (S2) is normally open.

10. The charging control pilot circuit according to claim 2, wherein an initial state of the single-pole four-throw switch (S2) is normally closed.

11. A charging socket, comprising the charging control pilot circuit according to any one of claims 1 to 10.

## Patentansprüche

1. Ladesteuerungs-Pilotkreis, umfassend:
eine Leitungsgruppe (11) umfassend eine erste Leitung (111), eine zweite Leitung (112) und eine dritte Leitung (113), wobei jeweils ein Ende der ersten Leitung (111), ein Ende der zweiten Leitung (112) und ein Ende der dritten Leitung (113) mit einer Verbindungsleitung einer externen Ladevorrichtung elektrisch verbunden sind, wobei die erste Leitung (111) die CC1-Leitung des Ladesteuerungs-Pilotkreises, die zweite Leitung (112) die CC2-Leitung des Ladesteuerungs-Pilotkreises und die dritte Leitung (113) die PE-Leitung des Ladesteuerungs-Pilotkreises ist;
eine erste Schleife (12), welche zwei oder mehr Widerstände umfasst, welche es ermöglichen, sich an verschiedene Typen von externen Ladevorrichtungen anzupassen, wobei die erste Schleife (12) zwischen dem anderen Ende der ersten Leitung (111) und dem anderen Ende der dritten Leitung (113) angeordnet und mit der ersten Leitung (111) und der dritten Leitung (113) elektrisch verbunden ist; und
eine zweite Schleife (13), welche zwischen dem anderen Ende der zweiten Leitung (112) und dem anderen Ende der dritten Leitung (113) angeordnet und mit der zweiten Leitung (112) und der dritten Leitung (113) elektrisch verbunden ist,
wobei die zweite Schleife (13) einen zweiten Schalter (Sv), einen sechsten Widerstand (Rv), eine Spannungsversorgung (U2), einen dritten Schalter (Sv') und einen siebten Widerstand (Rv') umfasst, wobei der zweite Schalter (Sv), der sechste Widerstand (Rv) und die Spannungsversorgung (U2) in Reihe verbunden sind und der sechste Widerstand (Rv) zu dem siebten Widerstand (Rv') und dem dritten Schalter (Sv') parallel verbunden ist; **dadurch gekennzeichnet, dass** die Ausgangszustände des zweiten Schalters (Sv) und des dritten Schalters (Sv') normalerweise geschlossen sind.

2. Ladesteuerungs-Pilotkreis nach Anspruch 1, wobei die erste Schleife (12) einen ersten Zweig (121) umfasst, und der erste Zweig (121) einen ersten Widerstand (R4), einen zweiten Widerstand (R4c), einen dritten Widerstand (R4c') und einen einpoligen Vierfachschalter (S2) umfasst, wobei ein beweglicher Kontakt des einpoligen Vierfachschalters (S2) mit dem anderen Ende der ersten Leitung (111) verbunden ist, und vier statische Kontakte des einpoligen Vierfachschalters (S2) jeweils aufgehängt und mit dem ersten Widerstand (R4), dem zweiten Widerstand (R4c) und dem dritten Widerstand (R4c') verbunden sind, und der erste Widerstand (R4), der zweite Widerstand (R4c) und der dritte Widerstand (R4c') mit dem anderen Ende der dritten Leitung (113) verbunden sind.

3. Ladesteuerungs-Pilotkreis nach Anspruch 2, wobei die Widerstandswerte des ersten Widerstands (R4), des zweiten Widerstands (R4c) und des dritten Widerstands (R4c') jeweils größer als 0 bzw. kleiner als oder gleich 100 MΩ sind.

4. Ladesteuerungs-Pilotkreis nach Anspruch 2, wobei die erste Schleife (12) weiter
einen zweiten Zweig (122) umfasst, der zu dem ersten Zweig (121) parallel verbunden ist und
einen ersten Schalter (S2') und einen vierten Widerstand (R4') umfasst, welche in Reihe verbunden sind.

5. Ladesteuerungs-Pilotkreis nach Anspruch 4, wobei ein Anfangszustand des ersten Schalters (S2') normalerweise offen ist.

6. Ladesteuerungs-Pilotkreis nach Anspruch 4, wobei ein Anfangszustand des ersten Schalters (S2') normalerweise geschlossen ist.

7. Ladesteuerungs-Pilotkreis nach Anspruch 2, wobei die erste Schleife (12) weiter einen dritten Zweig (123) umfasst, der zu dem ersten Zweig (121) parallel verbunden ist und einen fünften Widerstand (R3') umfasst.

8. Ladesteuerungs-Pilotkreis nach Anspruch 2, wobei die erste Schleife (12) weiter eine Diode (D1) umfasst, wobei eine Kathode mit dem beweglichen Kontakt des einpoligen Vierfachschalters (S2) verbunden ist, und wobei Anode mit dem anderen Ende der ersten Leitung (111) verbunden ist.

9. Ladesteuerungs-Pilotkreis nach Anspruch 2, wobei ein Anfangszustand des ersten einpoligen Vierfachschalters (S2) normalerweise offen ist.

10. Ladesteuerungs-Pilotkreis nach Anspruch 2, wobei ein Anfangszustand des ersten einpoligen Vierfachschalters (S2) normalerweise geschlossen ist.

11. Ladebuchse, umfassend den Ladesteuerungs-Pilotkreis nach einem der Ansprüche 1 bis 10.

## Revendications

1. Circuit pilote de commande de charge, comprenant :
un groupe de conducteurs (11) comprenant un premier conducteur (111), un deuxième conducteur (112) et un troisième conducteur (113), dans lequel une extrémité du premier conducteur (111), une extrémité du deuxième conducteur (112) et une extrémité du troisième conducteur (113) sont respectivement connectées électriquement à une ligne de connexion d'un dispositif de charge externe, dans lequel le premier conducteur (111) est le conducteur CC1 du circuit pilote de commande de charge, le deuxième conducteur (112) est le conducteur CC2 du circuit pilote de commande de charge et le troisième conducteur (113) est le conducteur PE du circuit pilote de commande de charge ;
une première boucle (12) comprenant deux ou plusieurs résistances permettant de s'adapter à différents types de dispositifs de charge externes, dans laquelle la première boucle (12) est disposée entre l'autre extrémité du premier conducteur (111) et l'autre extrémité du troisième conducteur (113) et connectée électriquement au premier conducteur (111) et au troisième conducteur (113) ; et
une deuxième boucle (13) disposée entre l'autre extrémité du deuxième conducteur (112) et l'autre extrémité du troisième conducteur (113) et connectée électriquement au deuxième conducteur (112) et au troisième conducteur (113),
dans lequel la deuxième boucle (13) comprend un deuxième interrupteur (Sv), une sixième résistance (Rv), une alimentation (U2), un troisième interrupteur (Sv') et une septième résistance (Rv'), dans lequel le deuxième interrupteur (Sv), la sixième résistance (Rv) et l'alimentation (U2) sont connectés en série, et la sixième résistance (Rv) est connectée en parallèle avec la septième résistance (Rv') et le troisième interrupteur (Sv') ; **caractérisé en ce que** les états initiaux du deuxième interrupteur (Sv) et du troisième interrupteur (Sv') sont normalement fermés.

2. Circuit pilote de commande de charge selon la revendication 1, dans lequel la première boucle (12) comprend une première branche (121), et la première branche (121) comprend une première résistance (R4), une deuxième résistance (R4c), une troisième résistance (R4c') et un interrupteur unipolaire à quatre positions (S2), dans lequel un contact mobile de l'interrupteur unipolaire à quatre positions (S2) est connecté à l'autre extrémité du premier conducteur (111), et quatre contacts statiques de l'interrupteur unipolaire à quatre positions (S2) sont respectivement suspendus et connectés à la première résistance (R4), à la deuxième résistance (R4c) et à la troisième résistance (R4c'), et la première résistance (R4), la deuxième résistance (R4c) et la troisième résistance (R4c') sont connectées à l'autre extrémité du troisième conducteur (113).

3. Circuit pilote de commande de charge selon la revendication 2, dans lequel les valeurs de résistance de la première résistance (R4), de la deuxième résistance (R4c) et de la troisième résistance (R4c') sont respectivement supérieures à 0 et inférieures ou égales à 100 MΩ.

4. Circuit pilote de commande de charge selon la revendication 2, dans lequel la première boucle (12) comprend en outre une deuxième branche (122), qui est connectée en parallèle avec la première branche (121) et
comprend un premier interrupteur (S2') et une quatrième résistance (R4') connectés en série.

5. Circuit pilote de commande de charge selon la revendication 4, dans lequel un état initial du premier interrupteur (S2') est normalement ouvert.

6. Circuit pilote de commande de charge selon la revendication 4, dans lequel un état initial du premier interrupteur (S2') est normalement fermé.

7. Circuit pilote de commande de charge selon la revendication 2, dans lequel la première boucle (12) comprend en outre une troisième branche (123), qui est connectée en parallèle avec la première branche (121) et comprend une cinquième résistance (R3').

8. Circuit pilote de commande de charge selon la revendication 2, dans lequel la première boucle (12) comprend en outre une diode (D1), dont la cathode est connectée au contact mobile de l'interrupteur unipolaire à quatre positions (S2), et dont l'anode est connectée à l'autre extrémité du premier conducteur (111).

9. Circuit pilote de commande de charge selon la revendication 2, dans lequel un état initial de l'interrupteur unipolaire à quatre positions (S2) est normalement ouvert.

10. Circuit pilote de commande de charge selon la revendication 2, dans lequel un état initial de l'interrupteur unipolaire à quatre positions (S2) est normalement fermé.

11. Prise de charge, comprenant le circuit pilote de commande de charge selon l'une quelconque des revendications 1 à 10.
